# EUROPEAN PATENT APPLICATION

(11) **EP 4 811 186 A1**
(43) Date of publication of application: **23.09.2026**
(21) Application number: 25164399.5
(22) Date of filing: 18.03.2025
(51) Int. Cl.: G06F 21/44, G01R 31/392, G06F 21/57, H04L 9/40

(54) **DEVICE HEALTH**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method of monitoring device health is described, which comprises continuously monitoring a plurality of characteristics of a device, and generating a device health score in dependence on a weighted combination of a plurality of functions, each function relating to one or more of the monitored characteristics of the device. In this way, a single value scoring may be used to characterise the current health of a device. This score may be used in a variety of way to improve performance, avoid faults, or take other actions.

## Description

The present disclosure relates to a method and apparatus for monitoring device health. Some embodiments herein relate to how the device health is monitored and/or to how the monitored device health is used to trigger responses.

### BACKGROUND

Electronic devices degrade over time, leading to weakening performance, errors and ultimately failure. It is disruptive to deal with these issues reactively. Obtaining and/or transitioning to a replacement device often requires time and planning.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a method of monitoring device health, comprising:
continuously monitoring a plurality of characteristics of a device; and
generating a device health score in dependence on a weighted combination of a plurality of functions, each function relating to one or more of the monitored characteristics of the device.

In this way, a single value scoring may be used to characterise the current health of a device. This score may be used in a variety of way to improve performance, avoid faults, or take other actions.

The weightings may be selected in dependence on a type or function of the device. This means that the device health score may be tailored to the considerations most important to that type of device.

At least some of the device characteristics are characteristics acquired and used for continuous authentication of the device.

The method may comprise comparing the device health score with a threshold, and carrying out a response if the device health score is below the threshold. The response may comprise at least one of displaying or transmitting an alert, inhibiting usage of the device, restarting the device, and upgrading the device.

The method may comprise comparing one or more of the characteristics or functions with a condition, and carrying out a response if the characteristic or function does not satisfy the condition. Satisfying the condition may be meeting a threshold value, or being within a specified range.

The plurality of functions may comprise two or more of a device attribute function, a hardware health function, a device characteristic function, and a network connectivity function.

The device attribute function may be a function of one or more of a device age, a firmware version, and an intended purpose.

The hardware health function may be a function of device manufacturing imperfections.

The device characteristic function may be a function of one or more of a battery level, internal temperature, and sensor functionality.

The network connectivity function may be a function of one or more of signal strength, packet loss rate and response time.

The characteristics may in some cases be indicative of imperfections in the device.

According to a second aspect, there is a computer program, which when executed on a computer will cause the computer to carry out a method according to the above.

The method may comprise monitoring changes in one or more of the device health, the characteristics and the functions with respect to time. An amount or rate of change may be monitored and used to evaluate an age of the device, where on a device lifcycle the device presently is, or a decommissioning timescale for the device. The amount or rate of change, or the device health score itself, or a value of one of the functions or a components of one of the functions, can also be used to identify probable future device failures, before they occur.

According to a third aspect, there is an apparatus for monitoring device health, comprising:
a controller configured to continuously monitor a plurality of characteristics of a device; and
to generate a device health score in dependence on a weighted combination of a plurality of functions, each function relating to one or more of the monitored characteristics of the device.

In the field of continuous authentication, a number of key characteristics are used to uniquely identify a device, such as indications of manufacturing imperfections exhibited through discernible features or behaviours of the device. The present application recognises that continual monitoring of such features along with device usage features such as Temperature, Core Voltage, Active Time etc. provides a promising basis on which to assess a health status of the device. Monitoring changes continually in these features over time provides insight into operating health and efficiency of the device, potentially identifying opportunities to trigger pre-failure notifications, maintenance actions, flagging a device for reliability etc.

A multiplicity of such features may be aggregated along with unique device characteristics over relatively long time periods to identify changes based on weighted metrics that are applicable across device types. Device health status can then be assessed and appropriate responsive action taken.

The approach is applicable to achieve advantages such as:
Allows combination of multiple features to check the device health
Deploy response according to device health report
Improve the device useability
Enhance the overall network performance
Lower the device unavailability or network down-time
Can automate the response - load balancing, software upgrade, device repair
Health variation for attack detection

Continuous authentication continuously collects and compares various metrics/information and compares it to the genuine user/device profile in real-time. The benefit of continuous authentication is that it can transparently and conveniently authenticate users beyond the point-of-entry and quickly identify imposters if they begin to use the device.

It will be understood that values captured during continuous authentication can be used for the device health check (without needing to recapture those values in a separate process). Device features that are used as fingerprinting such as manufacturing imperfections for continuous authentication combined with device usage features such as Temperature, Core Voltage, Active Time can be used to estimate the device health. Using same collected features for continuous authentication along with the device usage features will help to improve device efficiency and performance with response deployment as needed. Device's overall health may be checked continuously and identify potential problems before they become critical.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a data processing system for implementing the present technique;
FIG. 2 is a schematic flow diagram illustrating the method;
FIG. 3 is a schematic block diagram of one implementation of the technique; and
FIG. 4 is a graph showing how device health check-up features may be tracked over time.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

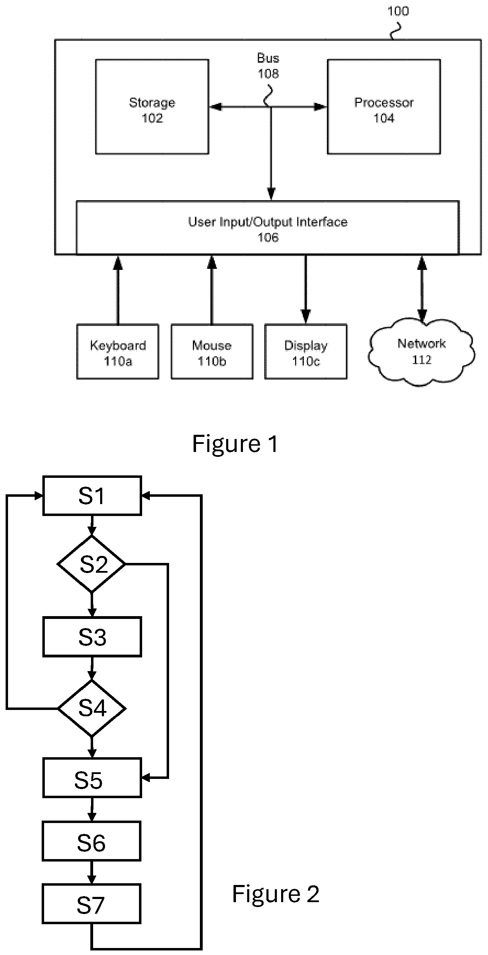

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

It would be beneficial to have improved ways of monitoring the health of a device, so that early interventions or replacements can be made, avoiding or at least ameliorating these issues. Continuous authentication is a method confirming an entity's (user/device) identity continually in real time throughout their entire session. Continuous authentication continuously collects and compares biometric (behavioural and/or physiological) information and compares it to the genuine user profile in real-time. The benefit of continuous authentication is that it can transparently and conveniently authenticate users beyond the point-of-entry and quickly identify imposters if they begin to use the device. Similarly, devices are needed to be authenticated before be the part of highly secure environment. Device authentication between sensor nodes and gateways has become a practical and fundamental security issue in the loT environments.

Device Characteristics may be summarised (in an exemplary sense) as follows:
Age: Generally, devices degrade over time. If your device is several years old, it might be nearing the end of its lifespan and experiencing performance issues.
Operating System: Out-of-date software can lead to security vulnerabilities and performance problems. Check for and install the latest updates for your operating system.
Usage Patterns: Heavy use can put strain on your device's hardware. If you notice performance drops after extended use, it might be a sign of overheating or overworked components.

Device Hardware may be summarised (in an exemplary sense) as follows:
Battery Health: Check your battery health settings. Most devices report battery health as a percentage of its original capacity. A significantly reduced capacity can impact device runtime.
Storage Space: Low storage space can slow down your device. Regularly clean up unnecessary files and consider upgrading storage if needed.
Thermal Performance: Excessive heat can damage components and throttle performance. If your device gets very hot during operation, consider cleaning dust buildup from vents or using a cooling pad.
Event Logs: Many devices have built-in event logs that record hardware errors. Checking these logs can reveal potential hardware issues.

Network Features may be summarised (in an exemplary sense) as follows:
Connectivity: Slow or unstable internet connection can indicate problems with your device's Wi-Fi adapter or your network itself. Run internet speed tests and troubleshoot connectivity issues.
Signal Strength: For cellular devices, check the signal strength indicator. Weak signal can lead to dropped calls and slow data speeds.

Based on the above characteristics, a Device Health Score (DHS) may be generated as a universal mathematical formula that combines all device characteristics, hardware, and network features into one equation for device health.

This is complicated due to the complexity of the problem of evaluating health in a universal manner for devices which come in many forms (phones, laptops, industrial equipment) with varying functionalities. The importance of different factors (battery life for a phone vs. processing power for a computer) varies by device, and the present technique uses weightings (differently for different type of device) to account for this.

In addition, challenge is further increased due to the inherent heterogeneity of these devices. However, the present technique proposes a framework that combines key features: $H \left(d\right) = w 1 F \left(a\right) + w 2 F \left(h\right) + w 3 F \left(c\right) + w 4 F \left(n\right)$

Here, H(d) represents the overall health score of device d. F(c), F(h), and F(n) represent functions evaluating device attributes (a), device hardware (h), device characteristics (c) and network connectivity (n), respectively. The weights, w1, w2, w3, and w4, denote the relative importance assigned to each factor.

Device Attributes (F(a)) This function could consider factors like device age, firmware version, and intended purpose. For instance, a newer device with up-to-date firmware might receive a higher score than an older one.

Hardware Health (F(h)) This function could consider factors like device manufacturing imperfections. For instance, Over-etching or under-etching during lithography processes.

Device Characteristics (F(c)) This function could evaluate metrics like battery level, internal temperature, and sensor functionality. A sensor with erratic readings would negatively impact the health score.

Network Connectivity (F(n)) This function could assess factors like signal strength, packet loss rate, and response time. A consistently weak signal or high packet loss could indicate network issues.

The specific form of each function (F(a), F(h), F(c)and F(n)) would depend on the specific device and application. Assigning weights (w1, w2, w3, w4) allows customization based on the device's role. For instance, a fitness tracker might prioritize battery life (weighting F(c) higher), while a security camera might emphasize network connectivity (weighting F(n) higher).

Table 1 below sets out example features / parameters of various different types and sub-types, and how these represent variations which can be monitored.

**TABLE I Device Health Score Features**

| **TYPE** | **SUB-TYPE** | **VARIATIONS** | **FEATURES / PARAMETERS** |
|---|---|---|---|
| **HARDWARE** | PHYSICAL/INTRINSIC CHARACTERISTIC | Hardware imperfection | Sensor Defects |
| | | | Calibrations matrices |
| | | | IC defects |
| | | | PUF |
| | | | Memory defects |
| | | | Magnetic sensor |
| | | | Phase offset |
| | | | I/Q imbalance |
| | | | Carrier frequency offset |
| | | | Turn on/off transient signals |
| | OPERATIONAL CHARACTERISTIC | Clock | Clock skewness |
| | | | Clock Drift |
| | | | Clock Offset |
| | | Exposure / Emission | Temperature |
| | | | Electromagnetic Radiation |
| | | | RF emission |
| | | Voltage / Current | Specific pattern charge depletion |
| | | Error / noise | Instantaneous frequency Error |
| | | | Phase error |
| | | | Amp. error |
| | | | Statics of Extracted Noise |
| | | Channel /location | Signal strength |
| | | | Frequency responses |
| | | | Channel state information |
| | BEHAVIOURAL CHARACTERISTIC | Persistent features | External collected behavioural source. |
| | | | Device design and settings |
| | | | Recourse utilization |
| | | | Event log |
| | | | Device history |
| | | | RF- DNA |
| | | | Multivariate distribution |
| **NETWORK** | NETWORK CHARACTERISTICS | Delay /Latency | Handshake Delay |
| | | | Application Specific Delay |
| | | | Network delay |
| | | | Queueing Delay |
| | | | Propagation delay |
| | | | Transmission delay |
| | | | Processing Delay |
| | | Access Time Slots | NOMA protocol with Time Slot |
| | | IP Traffic | NetFlow |

The general flow of the present technique is presented in Figure 2, in which the steps are as follows:

At a step S1, gather the required information from devices by various means, for example device features captured for device while continuously authenticating them.

At a step S2, evaluate whether a feature value is within an accepted range for that value. If so, then calculate the DHS at a step S3. If not, then select an appropriate response for a failure in respect of that type of feature value at a step S5. Following the step S3, evaluate at a step S4 whether DHS is within the threshold. If so, then return to the step S1 and repeat, to continuously check the device health. Otherwise, select the appropriate response for a failed device health check at the step S5. Following the step S5, at a step S6 optionally verify the response with a human-in-the-loop and deploy response accordingly at the step S7. The process then returns to the step S1.

In this way, an ongoing process of collecting relevant device information, comparing specific feature values with ranges, and comparing a device health with a threshold, to select (and ultimately deploy, potentially subject to human confirmation) responses suitable for the current device health and characteristics.

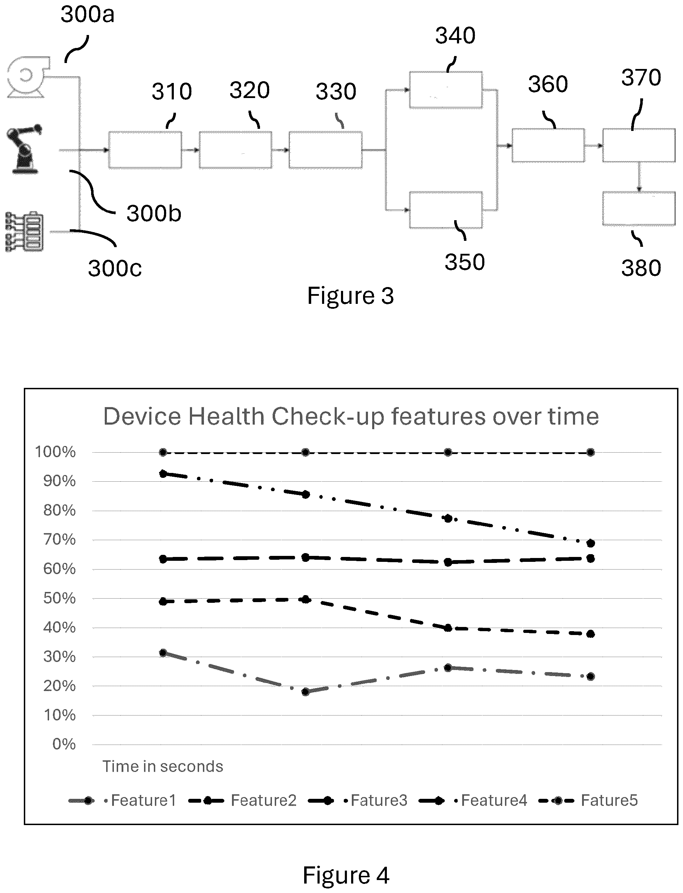

An example scenario will now be explained with reference to Figure 3. However, the system's versatility extends beyond the presented scenario, spanning various systems, including machine learning, deep learning, and reinforcement learning, while maintaining a consistent core system.

In this example, a system deployment is described with reference to an industrial control system (in a gas or oil power plant).

Data is collected from all the electronic systems 300a, 300b, 300c, such as sensors, actuators, PLCs, robot arms, and pumps. Imperfection data, such as that listed in the Table I above (but not limited to this) may be collected 320 from a server 310. Features of the collected data may be extracted 330, and will give information about imperfections on the devices. The features may include general aging features 340 and imperfection features 350, as shown. Continuously gathering 360 these features over a long period, according to this system, to define a health core 370, enables multiple features can be analysed, individually and together, and it can be studied how these imperfections will degrade over a long period to reveal the device health, and predict the device age 380. The objective is to systematically collect data from a variety of electronic systems, which include but are not limited to sensors, actuators, Programmable Logic Controllers (PLCs), robotic arms, and pumps. The data collection focuses on imperfections, as listed in the Table I. However, it is recognized that this list is not exhaustive. Monitoring these imperfections is valuable as they provide valuable insights into the operational health and efficiency of the devices involved.

This system enables a comprehensive understanding of how these imperfections evolve by continuously gathering and analysing these various features over an extended period. This ongoing study is valuable for accurately diagnosing the health of each device. Specifically, the Equation 1 used to evaluate a device health score integrates device health with various attributes, characteristics, and network connectivity metrics. This holistic approach is essential in forming a complete picture of device performance.

The significance of each feature (or function) is itself important; each will possess its weightage that varies depending on the specific type of device. This variability is important as it reflects the distinct operational characteristics and performance metrics across different systems. Table II, below, provides a representative overview of features pertinent to different device types. In particular, it can be seen that device D1 is assessed based on 3 functions F1, F2 and F3. Function F1 has a range of 20 (minimum) to 50 (maximum), function F2 has a range of 10 minimum to 20 (maximum), while function F3 has a range of 20 minimum to 30 maximum. These minimum and maximum values are used in the step S2 of Figure 2, described above. Similar considerations apply to the Device D2, which uses the functions F1, F2 and F3, but also the function F4. However, although the device D2 is assessed based on some of the same functions as the device D1, the acceptable ranges here are different, potentially accounting for differences between the nature and/or function of the two devices.

**Table II Example for feature values for various devices**

| **Device** | **Features** | **Min** | **Max** |
|---|---|---|---|
| **D1** | F1 | 20 | 50 |
| | F2 | 10 | 20 |
| | F3 | 20 | 30 |
| **D2** | F1 | 20 | 50 |
| | F2 | 20 | 30 |
| | F3 | 10 | 20 |
| | F4 | 10 | 30 |
| | | | |

Over time, as features are continuously collected and monitored, it becomes possible to detect significant changes that signal the ageing of the devices with significant accuracy. Such insights are invaluable, as they will facilitate the identification of the device's life cycle stages-an understanding that is highly beneficial for proactive maintenance and management.

Table 3 below indicates how different features and the overall health for different devices (D1 and D2) may result in specific responses. In particular, for D1 it can be seen that if the functions F1 to F3 are outside of range, various responses are automatically made - such as to restart the device (F1 failed), transmit an email to a SoC (security operation centre), when F2 is failed, or request upgrade of the device (F3 failed). When the device health score itself drops below the threshold value, a human-in-the-loop is brought in to evaluate the device to take an appropriate action. Similar considerations are given, with different responses, for the device D2.

| **Device** | **Features** | **Response** |
|---|---|---|
| **D1** | F1 outside min/max | Restart |
| | F2 outside min/max | SoC Email |
| | F3 outside min/max | Upgrade |
| | DHS<Threshold | HITL |
| **D2** | F1 outside min/max | Engineer email |
| | F2 outside min/max | Restart |
| | F3 outside min/max | Update |
| | F4 outside min/max | Engineer email |
| | DHS<Threshold | Upgrade device by increasing RAM |

Referring to Figure 4, this visually represents the patterns and trends that can emerge from data collection efforts using these techniques. This graphical analysis illustrates how devices perform over time, outlining deterioration patterns that correlate with usage and environmental factors.

Implementing this method will empower administrators to identify potential device failures before they occur and better understand the degradation curves of devices under various load conditions. This capability is extremely beneficial for operational continuity, allowing for timely interventions that can extend the life of the equipment.

Ultimately, this proactive approach to monitoring and analysis will lead to improved maintenance strategies, optimized resource allocation, and enhanced overall performance of the electronic systems in use. By understanding the nuances of device behaviour over time, administrators can ensure that they are equipped to make informed decisions that enhance efficiency and reduce downtime.

By continuously collecting and monitoring them over time, changes happening over time will reveal the age of the devices with high accuracy. This will help determine the device's life cycle.

This method will operators or administrators to determine and predict device failure and how the device is performing degradation over time with different types of loads. This will allow the administrator to detect device failure and its life cycle more accurately early.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of monitoring device health, comprising:
continuously monitoring a plurality of characteristics of a device; and
generating a device health score in dependence on a weighted combination of a plurality of functions, each function relating to one or more of the monitored characteristics of the device.

2. A method as claimed in claim 1, wherein the weightings are selected in dependence on a type or function of the device.

3. A method as claimed in claim 1 or claim 2, wherein at least some of the device characteristics are characteristics acquired and used for continuous authentication of the device.

4. A method according to any preceding claim, comprising comparing the device health score with a threshold, and carrying out a response if the device health score is below the threshold.

5. A method according to claim 4, wherein the one or more actions comprise at least one of displaying or transmitting an alert, inhibiting usage of the device, restarting the device, and upgrading the device.

6. A method according to any preceding claim, comprising comparing one or more of the characteristics or functions with a condition, and carrying out a response if the characteristic or function does not satisfy the condition.

7. A method according to claim 6, wherein satisfying the condition is meeting a threshold value.

8. A method as claimed in any preceding claim, wherein the plurality of functions comprise two or more of a device attribute function, a hardware health function, a device characteristic function, and a network connectivity function.

9. A method as claimed in any preceding claim, wherein the device attribute function is a function of one or more of a device age, a firmware version, and an intended purpose.

10. A method as claimed in any preceding claim, wherein the hardware health function is a function of device manufacturing imperfections.

11. A method as claimed in any preceding claim, wherein the device characteristic function is a function of one or more of a battery level, internal temperature, and sensor functionality.

12. A method as claimed in any preceding claim, wherein the network connectivity function is a function of one or more of signal strength, packet loss rate and response time.

13. A method as claimed in any preceding claim, wherein the characteristics are indicative of imperfections in the device.

14. A computer program, which when executed on a computer will cause the computer to carry out a method according to any preceding claim.

15. An apparatus for monitoring device health, comprising:
a controller configured to continuously monitor a plurality of characteristics of a device; and
to generate a device health score in dependence on a weighted combination of a plurality of functions, each function relating to one or more of the monitored characteristics of the device.
